# EUROPÄISCHE PATENTANMELDUNG

(11) **EP 0 872 281 A2**
(43) Veröffentlichungstag der Anmeldung: **21.10.1998**
(21) Anmeldenummer: 98106722.6
(22) Anmeldetag: 14.04.1998
(51) Int. Cl.: B03B 9/06, B08B 7/00, B02C 13/13

(54) **Verfahren zum Entlacken von lackierten Substratteilen und Einrichtung zur Durchführung dieses Verfahrens**

(30) Priorität: 16.04.1997 DE 19715945
(71) Anmelder: Wiedemann, Peter, 86633 Neuburg (DE)
(72) Erfinder: Wiedemann, Peter, 86633 Neuburg (DE)
(74) Vertreter: Weickmann, Heinrich, Dipl.-Ing.

(57) **Zusammenfassung**

Nach einem Ausführungsbeispiel der Erfindung werden die durch Schredderung eines Polypropylenstoßfängers gewonnenen Polypropylenscherben mit Polyurethanlackierung auf mindestens einer Seite in eine Hammermühle (10) gegeben und dort zusammen mit einem Kunststoffgranulat aus PA 66 GF 30 in Bewegung versetzt. Durch die zugeführte Bewegungsenergie tritt eine Erwärmung auf. Durch die Erwärmung wird die Haftung des Kunststofflacks auf Polyurethanbasis an den Polypropylenscherben reduziert. Durch den Aufprall der Granulatkörner einer Größe von ca. 3 mm werden Lackpartikel gelöst, und es werden Scherben erhalten, die bis zu 99 % und mehr entlackt sind. Durch Wasserzufuhr nach Erreichen einer Temperatur von etwa 100°C wird der Temperaturanstieg der Polypropylenscherben begrenzt, so daß diese auf einer Temperatur von wenig über 100°C verharren. Bei dieser Temperatur bleiben die Polypropylenscherben strukturfest.

## Beschreibung

Bei der Herstellung und in noch größerem Umfang bei der Aufarbeitung von technischen Geräten, insbesondere Kraftfahrzeugen, fallen in großem Umfang lackierte Substratteile auf Kunststoffbasis an. Diese Substratteile können wegen ihrer Zusammensetzung aus dem Substratmaterial einerseits und dem Lack andererseits nicht ohne weiteres einer Wiederverwertung zugänglich gemacht werden. Es besteht deshalb die Aufgabe, lackierte Substratteile auf Kunststoffbasis in wirtschaftlicher und umweltfreundlicher Weise von den Lackanteilen möglichst vollständig zu reinigen.

Zur Lösung dieser Aufgabe wird ein Verfahren mit den folgenden Verfahrensschritten angewandt:
a) Die Substratteile werden zumindest im Lackbeschichtungsbereich auf eine Temperatur innerhalb eines vorbestimmten Temperaturbereichs erwärmt, bei der die Struktur der Substratteile im wesentlichen unverändert erhalten bleibt, die Haftung der Lackschicht auf den Substratteilen jedoch reduziert wird;
b) die Substratteile werden einer Lackablösebehandlung durch bewegte Granulatteilchen ausgesetzt, während die Temperatur in dem vorbestimmten Temperaturbereich gehalten wird;
c) die zur Temperatureinstellung auf den vorbestimmten Temperaturbereich benötigte Wärme wird wenigstens zum Teil durch die zur Behandlung mit den Granulatteilchen aufgewendete kinetische Energie zugeführt;
d) der Anstieg der Temperatur über den vorbestimmten Temperaturbereich hinaus wird durch Zufuhr einer Kühlflüssigkeit begrenzt, deren Flüssigkeits-Dampfphasen-Umwandlungstemperatur unter den gegebenen Systemdruckverhältnissen annähernd in dem vorbestimmten Temperaturbereich liegt, wobei mindestens ein Teil der zugeführten Flüssigkeit verdampft wird;
e) das Granulat und die abgelösten Lackpartikel werden von den Substratteilen abgetrennt.

Der Begriff "Substratteile" umfaßt insbesondere Teile, welche während der mechanischen Lackablösebehandlung aufgrund ihrer Größe und Gewichtsverteilung laufend ihre Lage verändern, so daß alle etwa mit Lack beschichteten Flächen im Laufe der mechanischen Einwirkung einer Lackablösebehandlung unterworfen werden. Insbesondere ist daran gedacht, die Substratteile auf Teilgrößen von etwa 30 - 60 mm x 30 - 60 mm x 2 - 5 mm einzustellen. Es hat sich gezeigt, daß bei diesen Teilgrößen gute Entlackungsvoraussetzungen gegeben sind.

Wenn hier weiter davon die Rede ist, daß die zur Temperatureinstellung auf den vorbestimmten Temperaturbereich benötigte Wärme wenigstens z.T. durch die zur Behandlung mit den Granulatteilchen aufgewendete kinetische Energie zugeführt wird, so ist diese kinetische Energie gleichzusetzen mit der Gesamtenergie, die den Substratteilen zugeführt wird, gleichgültig in welcher Weise diese mechanische Energie in Wärme umgesetzt wird, sofern nur die durch Umsetzung mechanischer Energie gewonnene Wärme Einfluß auf die Temperatureinstellung der Substratteile hat.

Wenn hier weiter davon gesprochen wird, daß die Struktur der Substratteile im wesentlichen unverändert erhalten bleibt, so soll dies insbesondere bedeuten, daß die Substratteile in demjenigen Grade der Vereinzelung erhalten bleiben, in dem sie bei Beginn der Behandlung vorliegen. Insbesondere bedeutet dies, daß die Behandlung so durchgeführt wird, daß sie nicht zur Klumpenbildung führt. Ferner soll diese Aussage bedeuten, daß die Substratteile im wesentlichen diejenige Form und Größe beibehalten, die sich für die Entlackungsvorgänge als optimal erwiesen hat. Damit impliziert die Vorschrift, daß die Struktur der Substratteile im wesentlichen erhalten bleiben soll, regelmäßig auch, daß eine gewisse Mindesthärte der Substratteile erhalten bleibt, die ausreicht, um wesentliche Strukturveränderungen unter den Behandlungsbedingungen zu vermeiden.

Es hat sich gezeigt, daß durch die Verwendung von Kühlflüssigkeiten, deren Flüssigkeits-Dampfphasen-Umwandlungstemperatur unter den jeweiligen Systemdruckverhältnissen annähernd in dem vorbestimmten Temperaturbereich liegt, den besonderen Vorteil bietet, daß zur Kühlung der Substratteile und der mit ihnen in Kontakt stehenden Teile neben der Wärmemenge, die zur Temperaturerhöhung der Kühlflüssigkeit verbraucht wird, auch die regelmäßig noch größere Wärmemenge zur Verfügung steht, die zur Phasenumwandlung verbraucht wird. Dies bedeutet, daß die zur Temperatureinstellung notwendigen Flüssigkeitsmengen relativ gering sind. Weiterhin wird die Temperaturregelung verhältnismäßig einfach, weil sich dort, wo Phasenumwandlung stattfindet, immer eine bestimmte Temperatur einstellen wird, nämlich die Flüssigkeits-Dampfphasen-Umwandlungstemperatur. Zwar können in Bereichen, wo starke mechanische Beeinflussungen der Substratteile oder der Granulatteile eintreten, höhere Temperaturen entstehen, die nur mit Zeitverzögerung auf die Phasen-Umwandlungstemperatur heruntergekühlt werden. Bei entsprechender, durch einfache Vorversuche leicht bestimmbarer Kühlmittelzufuhr kann man jedoch erreichen, daß im großen und ganzen eine homogene Temperaturverteilung im gesamten Behandlungsbereich eintritt. Durch Temperaturmessungen kann der jeweilige Bedarf an neu zuzuführenden Kühlmitteln bestimmt werden. Das Entweichen von Dampf kann sichtbar gemacht werden und zeigt an, daß eine wirksame Kühlung stattfindet. Hört der Dampfaustritt auf, so ist dies ein Anzeichen dafür, daß neue Kühlflüssigkeit zugeführt werden muß, um weiterhin für Kühlung zu sorgen.

Es ist grundsätzlich möglich, die Substratteile, bevor sie der Behandlung durch die bewegten Granulatteilchen ausgesetzt werden, vorzuwärmen, um die zur Erreichung des vorbestimmten Temperaturbereichs notwendige Zeit zu verkürzen und damit die Leistung der jeweiligen Anlage zu erhöhen. Man kann aber auch so arbeiten, daß die zur Temperatureinstellung in dem vorbestimmten Temperaturbereich benötigte Wärme im wesentlichen vollständig durch die zur Behandlung mit bewegten Granulatteilchen aufgewandte kinetische Energie zugeführt wird. Die Entscheidung, welchen Weg man wählt, hängt von den Verhältnissen in dem jeweiligen Betrieb und von den Kosten für die jeweilige Energieform ab.

Um in möglichst kurzen Behandlungszeiten zum gewünschten Endergebnis, d.h. zur Entlackung, zu kommen, wird man die Flüssigkeitszufuhr erst dann einleiten, wenn eine haftungsvermindernde Temperatur innerhalb des vorbestimmten Temperaturbereichs erreicht ist. Wenn die Erweichungstemperatur der Substratteile nahe der Flüssigkeits-Dampfphasen-Umwandlungstemperatur liegt, so mag es aus Gründen der Vorsicht geboten sein, mit der Kühlmittelzufuhr bereits etwas früher zu beginnen.

Die Behandlung mit den bewegten Granulatteilchen und die Flüssigkeitszufuhr zur Temperatureinstellung werden solange fortgesetzt, bis ein gewünschter Grad der Entlackung der Substratteile eingetreten ist. Der gewünschte Grad der Entlackkung hängt davon ab, in welcher Weise die Substratteile weiterverwertet werden sollen. Grundsätzlich ist es mit dem erfindungsgemäßen Verfahren möglich, Entlackungsgrade von 99 % und mehr zu erreichen. Entlackungsgrad in % bedeutet dabei, daß 99 % des ursprünglich auf den Substratteilen anhaftenden Lackes entfernt werden. Der Entlackungsgrad kann nach einiger Erfahrung mit einer Anlage in Beziehung zur Behandlungszeit gesetzt werden, so daß man weiß, wie lange eine Behandlung unter gegebenen Randbedingungen fortgesetzt werden muß, um einen bestimmten gewünschten Entlackungsgrad zu erreichen. Es ist auch möglich, während der Entlackungsvorgänge Proben zu entnehmen und aus diesen den eingetretenen Entlackungsgrad zu ermitteln. Beim Isolieren der Substratteile kann man so vorgehen, daß die Granulatteilchen und die Lackpartikel, gemeinsam, ggf. zusammen mit etwaigen Flüssigkeitsresten und/oder Abrieb von Substratteilen und/oder Granulatteilchen von den Substratteilen abgetrennt werden. Diese Abtrennung ist relativ einfach, weil die Substratteile wesentlich größer sind als die Granulatteilchen und die Lackpartikel, so daß das Isolieren der Substratteile durch einfache Sieboperationen vorgenommen werden kann. Diese Sieboperationen können in unmittelbarem Anschluß an die Entlackungsbehandlung durchgeführt werden, wenn z.B. die Entlackungsbehandlung in einem Raum durchgeführt wird, dessen Begrenzungsflächen wenigstens z.T. als verschließbares Sieb ausgebildet sind.

Die Substratteile, die Granulatteilchen und die Lackpartikel können jedoch auch gemeinsam, ggf. zusammen mit etwaigen Flüssigkeitsresten und/oder Abrieb von Substratteilen und/oder Granulatteilchen aus der Entlackungsbehandlungszone entfernt werden, wobei das entfernte Gemisch anschließend durch geeignete Maßnahmen wie etwa Siebungs-, Windsichtungs- und/oder Waschmaßnahmen in die einzelnen Komponenten aufgetrennt wird. Auf diese Weise kann der Durchsatz und somit die Kapazität der zur Entlackung verwendeten Vorrichtung vorteilhaft erhöht werden.

Die Isolierung der Substratteilchen gestaltet sich besonders einfach, wenn das Gemisch aus Substratteilen, Granulatteilchen und Lackpartikeln getrocknet wird, bevor die Granulatteilchen und die Lackpartikel gemeinsam von den Substratteilen abgetrennt werden. Demgemäß wird man versuchen, zumindest gegen Ende der Entlackungsbehandlung das Kühlmittel so zu dosieren, daß bei Eintritt des gewünschten Entlackungsgrads möglichst kein überschüssiges Kühlmittel mehr in der jeweiligen Anlage enthalten ist.

Um sicherzustellen, daß die stochastisch in einem Haufwerk angeordneten Substratteile mit all denjenigen Flächen, die möglicherweise lackiert sind, der Entlackungsbehandlung unterworfen werden, wird empfohlen, daß die Granulatteilchen und die Substratteile während der Lackablösebehandlung der Substratteile mit den Granulatteilchen einer relativen Wirbelbewegung unterworfen werden.

Die Lackablösebehandlung der Substratteile kann grundsätzlich in der Weise geschehen, daß die Substratteile einem Beschuß mit Granulatteilchen ausgesetzt werden. Die Beschleunigung der Granulatteilchen kann dann außerhalb des Bereichs der Schüttung der Substratteile erfolgen, beispielsweise dadurch, daß die Granulatteilchen zur Beschleunigung mechanischen Beschleunigermitteln, etwa bewegten Paddeln, ausgesetzt werden, oder daß die Granulatteilchen in einem Fluidstrom, d.h. einem Flüssigkeits- oder Gasstrom, beschleunigt werden. Möglich ist aber auch, daß die Lackablösebehandlung der Substratteile durch Schlagteile eines aus Substratteilen und Granulatteilchen bestehenden Mischguts erfolgt. In diesem Fall werden Substratteile und Granulatteilchen gleichzeitig beschleunigt und prallen gegeneinander.

Nach der Abtrennung einer Granulatteilchen-Lackpartikel-Mischfraktion von den Substratteilen können die Lackpartikel von den Granulatteilchen abgetrennt werden, so daß die Granulatteilchen wiederverwendet werden können. Die Abtrennung der Lackpartikel von der Granulatteilchen und Lackpartikel enthaltendend Mischfraktion kann durch Auswaschen oder durch pneumatische Verfahren oder auch durch einfaches Sieben erfolgen. Als pneumatische Verfahren kommen die sog. Windsichtverfahren in Frage. Wendet man die Auswaschung an, so können die Lackpartikel aus der Auswaschflüssigkeit abgetrennt werden, etwa durch Sedimentation. In diesem Fall kann auch die Auswaschflüssigkeit wiederverwendet oder umweltschonend entsorgt werden.

Das erfindungsgemäße Verfahren kann chargenweise durchgeführt werden, kann aber auch teilweise oder vollständig kontinuierlich durchgeführt werden.

Besonders einfach läßt sich das erfindungsgemäße Verfahren dann durchführen, wenn die Struktur der Substratteile in der Gegend von 100°C im wesentlichen erhalten bleibt und andererseits die Lackschichten in der Gegend von 100°C eine für die mechanische Ablösung ausreichende Haftungsreduzierung erleiden; in diesem Fall kann man als Kühlflüssigkeit Wasser zuführen, dessen Flüssigkeits-Dampfphasen-Umwandlungstemperatur bei 100°C liegt. Die Verwendung von Wasser als Kühlflüssigkeit ist kostengünstig und umweltschonend.

Es fallen in großem Umfang Kunststoffteile mit einem Gehalt an Polypropylen, Polybutylen-terephthalat und Polybutylen-terephthalat/Polycarbonat-Blends an. Diese Kunststoffteile sind bei 100°C im wesentlichen noch strukturstabil und können deshalb der bevorzugten Durchführungsform des erfindungsgemäßen Verfahrens unter Verwendung von Wasser als Kühlmittel unterworfen werden, sofern die Lackkomponente bei 100°C eine wesentliche Reduzierung ihrer Haftung an der jeweiligen Kunststoffoberfläche erleidet.

Weiterhin fallen in großem Umfang Kunststoffabfälle an, welche mit Kunstharzlacken, insbesondere Kunstharzlacken auf Polyurethan-Basis, beschichtet sind. Diese Kunstharzlacke erfahren bei Temperaturen um 100°C eine erhebliche Reduzierung ihrer Haftung. Dies bedeutet, daß auch in diesen Fällen mit Wasser als Kühlmittel gearbeitet werden kann, sofern die jeweils zugehörigen Substratteile den Anforderungen genügen.

Ein häufiger Fall sind Kunststoffabfälle, bei denen das Substrat aus den obengenannten Kunststoffen Polypropylen oder Polybutylen-terephthalat oder ein Polybutylen-terephthalat/Polycarbonat-Blend enthält oder aus einem solchen vollständig besteht und bei denen als Lack Polyurethanlack verwendet wird. Bei dieser Kombination eignet sich das erfindungsgemäße Verfahren unter Anwendung von Wasser in optimaler Weise. Beispielsweise fallen lackierte Kunststoffteile mit einem der obengenannten Kunststoffe als Strukturmaterial und mit Polyurethanlacken in großem Umfang bei der Aufarbeitung von Kraftfahrzeugen und Kraftfahrzeugteilen an. Wesentliche Karosserieteile von Kraftfahrzeugen, insbesondere Stoßfänger und Stoßstangen, werden nämlich aus solchen Materialkombinationen hergestellt.

Die Aufbereitung von Kunststoffabfällen auf eine Teilegröße von 30 - 60 x 30 - 60 x 2 - 5 mm dient zum einen dem Zwecke, bei der erfindungsgemäßen Bearbeitung eine zwangsläufige ständige Umschichtung zu erreichen, welche die Darbietung aller Flächen für die etwa notwendige Lackabtragung zur Folge hat. Zum anderen sind Teile in der genannten Größenordnung für übliche Rezyklisierungsverfahren geeignet.

Geht man beispielsweise von Karosserieteilen, wie Stoßfängern eines Autos aus, so kann man zur Gewinnung von Teilegrößen der oben angegebenen Maße die jeweiligen Karosserieteile einer Schredderbehandlung unterwerfen, bei welcher die Karosserieteile geschnitten oder gebrochen werden.

Als Granulatteilchen kommen z.B. Kunststoffteilchen, wie Polyamid-Teilchen, in Frage. Man kann aber mit Nußschalenkörnern oder Sandkörnern arbeiten. Die Wahl hängt einerseits von den jeweils zu verarbeitenden Kunststoffteilen ab und andererseits von den verfügbaren Einrichtungen zur Beschleunigung. Die Granulatkörner liegen regelmäßig in einem Korngrößenbereich von 0,5 - 3 mm. In der Regel wird man bei Körnern mit großem spezifischem Gewicht an der unteren Grenze dieses Korngrößenbereichs arbeiten und bei abnehmendem spezifischem Gewicht an der oberen Grenze des Korngrößenbereichs. Die Auswahl der Korngröße hängt auch davon ab, in welcher Weise die Behandlung durchgeführt wird. Werden die Granulatteilchen in einer gesonderten Beschleunigereinrichtung mechanischer oder pneumatischer Art beschleunigt, bevor sie auf die Kunststoffteile mit Lackschicht aufgeschossen werden, so wählt man Korngrößen bevorzugt an der unteren Grenze des angegebenen Bereichs. Wählt man dagegen eine Verfahrensweise, bei welcher die Granulatteilchen mit den zu behandelnden Kunststoffteilen vermischt und dann einer Schlagbehandlung gemeinsam unterworfen werden, so wählt man die Korngröße bevorzugt an der oberen Grenze des angegebenen Korngrößenbereichs.

Für die Wirksamkeit des Lackabtrags ist auch die Oberflächenform der Granulatteilchen von Bedeutung. Je eckenreicher und kantenreicher die Oberfläche ist, desto besser ist die Lackabtragwirkung. Arbeitet man mit Sandkörnern oder Nußschalenteilchen, so hat man von der Herstellung dieser Teilchen her eine eckenreiche und kantenreiche Oberflächenstruktur vorliegen. Arbeitet man mit Kunststoffgranulatkörnern, so wählt man insbesondere zylindrische Körner mit kantigem Übergang zwischen Mantelfläche und Endflächen. Diese Körner lassen sich in herkömmlichen Kunststoffformierungseinrichtungen kostengünstig herstellen.

Das jeweils anzuwendende Granulat kann mehrfach verwendet werden, wenn es nach jedem Entlackungsvorgang oder jeweils nach einigen Entlackungsvorgängen von den Lackrückständen und etwaigem Abrieb befreit wird. Dabei kann man Abriebverluste jeweils durch Neugranulat ersetzen, so daß im Dauerbetrieb stets mit einem ausreichenden Anteil an scharfkantigen und spitzeckigen Granulatkörnern gerechnet werden kann.

Für die Lackabtragung und für den Energieeinsatz ist auch das Gewichtsverhältnis von Kunststoffteilen und Granulat sowie der Füllgrad des jeweiligen Bearbeitungsraums von Einfluß. Man kann die optimalen Gewichtsverhältnisse und Füllgrade durch einfache Vorversuche bestimmen. Gute Ergebnisse wurden erreicht, wenn das Gewichtsverhältnis von Kunststoffteilen zu Granulat auf Polyamidbasis bei 1:2 liegt und in dem jeweiligen Bearbeitungsraum ca. 30 % von dessen Volumen durch das Gemisch von Kunststoffteilen und Granulat gefüllt sind.

Das Grundprinzip des erfindungsgemäßen Verfahrens kann in der Aufeinanderfolge folgender Schritte gesehen werden:
a) Die Substratteile werden zumindest im Lackbeschichtungsbereich auf eine Temperatur innerhalb eines vorbestimmten Temperaturbereichs erwärmt, bei der die Struktur der Substratteile im wesentlichen unverändert erhalten bleibt, die Haftung der Lackschicht auf den Substratteilen jedoch reduziert wird;
b) die Substratteile werden einer mechanischen Lackablösebehandlung z.B. durch Granulatbeschuß oder/und Reibkontakt mit Reibkörpern oder/und Schlagkontakt mit Schlagkörpern ausgesetzt, während die Temperatur in dem vorbestimmten Temperaturbereich gehalten wird;
c) die zur Temperatureinstellung auf den vorbestimmten Temperaturbereich benötigte Wärme wird wenigstens zum Teil durch die zur mechanischen Lackablösebehandlung aufgewendete kinetische Energie zugeführt;
d) der Anstieg der Temperatur über den vorbestimmten Temperaturbereich hinaus wird durch Zufuhr eines Kühlmittels begrenzt;
e) die Substratteile werden von dem Granulat, den Reibkörpern bzw. Schlagkörpern, etwaigem Abrieb und etwaigen Kühlmittelrückständen abgetrennt.

Dieses Verfahren läßt sich mit weiteren vorstehend beschriebenen Maßnahmen ergänzen.

Die Erfindung betrifft weiter eine Einrichtung zum Entlacken von lackierten Substratteilen auf Kunststoffbasis gekennzeichnet durch eine Schlagmühle mit einem Schlagraum, einen in diesem Schlagraum umlaufenden Schlagmühlenrotor, Beschickungsmittel zur Beschickung des Schlagraums mit den Substratteilen, Beschickungsmittel zur Beschickung des Schlagraums mit dem Granulat, Antriebsmittel zum Antrieb des Schlagmühlenrotors, Erwärmungsmittel zum Erwärmen der Substratteile zumindest in ihren lackierten Oberflächenbereichen auf eine Temperatur innerhalb eines vorbestimmten Temperaturbereichs, in dem die Substratteile ihre Struktur im wesentlichen beibehalten, die Haftung der Lackbeschichtung an den Substratteilen jedoch reduziert wird, Beschickungsmittel zur Einführung von Kühlflüssigkeit in den Schlagraum und Mitteln zum Abzug und zur wenigstens teilweisen Fraktionierung der Substratteile, des Granulats, abgelöster Lackpartikel etwaiger Rückstände der Kühlflüssigkeit und etwaigen Abriebs der Substratteile und/oder des Granulats.

Wenn hier von Erwärmungsmitteln zum Erwärmen der Substratteile gesprochen wird, so ist diese Angabe dahin zu verstehen, daß die Erwärmungsmittel wenigstens z.T., aber auch ausschließlich von den Antriebsmitteln zum Antrieb des Schlagmühlenrotors gebildet sein können, welche mechanische Energie in den Schlagraum einbringen und dort in Wärmeenergie umsetzen. Es soll aber auch nicht ausgeschlossen sein, daß in einer oder mehreren Beschickungsstrecken Erwärmungsmittel vorgesehen sind, um die einzelnen Komponenten auf dem Weg zum Schlagraum vorzuwärmen.

Der Schlagmühlenrotor kann beispielsweise als ein Hammermühlenrotor ausgebildet sein, der im Rahmen der folgenden Beschreibung eines Ausführungsbeispiels noch näher erläutert wird.

Die Antriebsmittel des Schlagmühlenrotors werden bevorzugt auf eine Leistungsaufnahme eingestellt, bei welcher sie die Funktion der Wärmezufuhr wenigstens teilweise erfüllen.

Die Zuführmittel für die Kühlflüssigkeit können an eine Kühlmittelversorgung angeschlossen sein, welche ein in dem vorbestimmten Temperaturbereich verdampfendes Kühlmittel liefert, wobei der Schlagraum vorzugsweise mit einem Dampfabzug versehen ist. Dabei können Regelungsmittel zur Aufrechterhaltung des vorbestimmten Temperaturbereichs vorgesehen sein. Diese Regelungsmittel können beispielsweise darauf beruhen, daß einerseits durch eine Temperatursensorik in dem Schlagraum die jeweilige Temperatur gemessen wird und daß in Abhängigkeit von der gemessenen Temperatur von Soll-Wert/Ist-Wert-Vergleich eine Regelgröße für die Menge der pro Zeiteinheit zugeführten Kühlflüssigkeit gewonnen wird.

Die Schlagmühle ist nach einer einfachen und kostengünstigen Ausführungsform für Chargenbetrieb ausgebildet. Diese Schlagmühle kann mit einer verschließbaren Entnahmeöffnung in solcher Lage ausgeführt sein, daß der Inhalt des Schlagraums bei Stillstand oder bei Austragsbetrieb des Schlagmühlenrotors austritt. Durch diese Entnahmeöffnung kann beispielsweise der entlackte Kunststoff ausgetragen werden, wenn vorher bereits Lackpartikel, Granulatkörner und etwaiger Abrieb ausgetragen worden sind. Dies ist etwa dadurch möglich, daß der Schlagraum wenigstens teilweise durch ein Sieb begrenzt ist, welches zwischen einem Durchlaßzustand und einem Abschlußzustand umstellbar ist, wobei dieses Sieb in seiner Maschenweite so bemessen ist, daß es im Durchlaßzustand Lackpartikeln, gewünschtenfalls auch den Granulatkörnern und etwaigem Abrieb der Substratteile oder/und der Granulatkörner Durchlaß gewährt, während die Substratteile zurückgehalten werden. Eine einfachste Ausführungsform eines solchen Siebes beruht darauf, daß an die Außenseite des Siebes eine entsprechend geformte Verschlußklappe wahlweise angelegt oder abgehoben werden kann.

Durch die Entnahmeöffnung kann aber auch der gesamte Inhalt des Schlagraums, also z.B. entlackte Substratteile, Granulatkörner, Lackpartikel und etwaiger Abrieb gemeinsam ausgetragen werden. In diesem Fall ist es nicht notwendig, einen Teil der Begrenzung des Schlagraums als verschließbares Sieb auszubilden.

Um in möglichst kurzer Abfolge chargenweise Entlackungsperioden aufeinander folgen lassen zu können, kann es vorteilhaft sein, wenn die Beschickungsmittel für die Substratteile oder/und die Beschickungsmittel für das Granulat mit Chargenbildungsmitteln ausgeführt sind, welche während des Entlackungsbetriebs einer Charge die Bildung einer nächstfolgend zu behandelnden Charge oder der Komponenten für die nächstfolgend zu behandelnde Charge gestatten.

Die Beschickungsmittel für die Substratteile oder/und die Granulatteilchen können vorteilhaft so ausgeführt sein, daß die Substratteile oder/und die Granulatteilchen aus ihren jeweiligen Vorratsbehältern zugeführt und in separaten Dosierbehältern vordosiert werden. Anschließend kann die Zugabe zum Schlagraum über separate Zufuhrkanäle oder über einen gemeinsamen Zufuhrkanal erfolgen. Weiterhin ist es möglich, in die Beschickungsmittel eine Vormischeinrichtung zur Vormischung von Granulatteilchen und Substratteilen aufzunehmen.

Um mit einem sparsamen Einsatz von flüssigem Kühlmittel eine ausreichende Kühlung durchführen zu können, ist vorgesehen, daß der Schlagraum gegen Flüssigkeitsablauf im wesentlichen abgedichtet oder abdichtbar ist.

Das Grundprinzip der erfindungsgemäßen Einrichtung ist gekennzeichnet durch einen Behandlungsraum, Behandlungsmittel in diesem Behandlungsraum zur mechanischen Lackablösebehandlung, Beschickungsmittel zur Beschickung des Behandlungsraums mit den Substratteilen, Antriebsmittel zum Antrieb der Behandlungsmittel, Beschickungsmittel zur Einführung von Kühlflüssigkeit in den Behandlungsraum und Mittel zum Abzug und zur wenigstens teilweisen Fraktionierung der Substratteile, abgelöster Lackpartikel, etwaiger Rückstände der Kühlflüssigkeit und etwaigen Abriebs der Substratteile, wobei die Kühlflüssigkeit zur Begrenzung des durch die Zuführung mechanischer Behandlungsenergie bewirkten Temperaturanstiegs der Substratteile auf einen Temperaturbereich dient, in dem die Struktur der Substratteile im wesentlichen erhalten bleibt, die Haftung der Lackschicht auf den Substratteilen jedoch reduziert wird.

Die beiliegenden Figuren erläutern die Erfindung anhand eines Ausführungsbeispiels. Es stellen dar:
- Fig. 1: einen Querschnitt durch eine Schlagmühle zur Durchführung der erfindungsgemäßen Entlackungsbehandlung von Kunststoffteilen;
- Fig. 2: einen Schnitt durch eine Windsichtereinrichtung zur Fraktionierung von Granulatteilchen und Lackpartikeln und
- Fig. 3: einen Querschnitt durch eine weitere Ausführungsform einer Schlagmühle zur Durchführung der erfindungsgemäßen Entlackungsbehandlung von Kunststoffteilen.

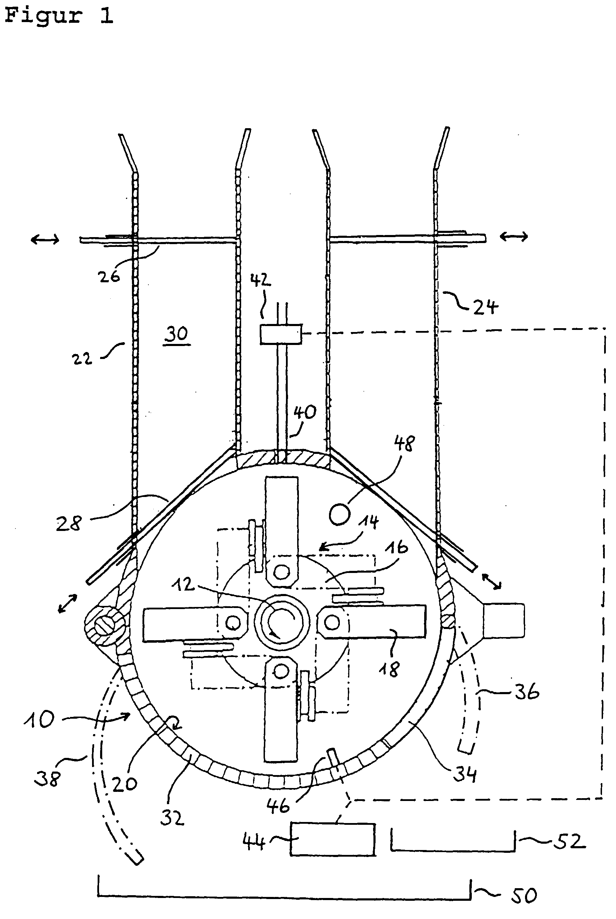

In Fig. 1 ist die Trommel einer Schlagmühle insgesamt mit 10 bezeichnet. In den Endwänden dieser Trommel 10 ist die Welle 12 eines Schlagmühlenrotors 14 gelagert. Der Schlagmühlenrotor 14 umfaßt einen Nabenteil 16, an dem Hammerkörper 18 schwenkbar gelagert sind. Die Hammerkörper 18 stellen sich bei Rotation des Schlagmühlenrotors 14 in die in Fig. 1 gezeichnete Stellung ein und können im Ruhezustand bis in die strichpunktiert Stellungen zurückschwenken. Die Hammerkörper 18 stehen in ihrer Betriebsstellung mit ihren radial äußeren Enden, der Innenumfangsfläche 20, der Trommel 10 mit geringem Abstand gegenüber.

Im oberen Bereich der Trommel sind an den Trommelinnenraum ein Zufuhrschacht 22 für Substratteile und ein Zufuhrschacht 24 für Granulat angeschlossen. In dem Zufuhrschacht 22 sind zwei Schleusenschieber 26 und 28 vorgesehen, welche einen Dosierraum 30 begrenzen. Entsprechend ist der andere Zufuhrschacht 24 für das Granulat ausgebildet. In Fig. 1 ist die Anordnung der beiden Zufuhrschächte 22 und 24 schematisch dargestellt. Vorteilhaft befinden sich die beiden Zufuhrschächte 22 und 24 in einer Anordnung, die das Befüllen des Schlagraums bei laufendem Schlagmühlenrotor erlaubt.

Der Bodenteil der Trommel 10 ist teilweise von einem Sieb 32, teilweise von einem Öffnungsbereich 34 gebildet, welcher durch einen Deckel 36 verschlossen ist. Der Deckel 36 kann in die strichpunktiert eingezeichnete Öffnungsstellung geschwenkt werden. Dem Siebbereich 32 ist ein weiterer Schwenkdeckel 38 zugeordnet, so daß der Siebbereich 32 entweder siebungswirksam gemacht werden oder verschlossen werden kann.

Im oberen Bereich ist ein Zufluß 40 für eine Kühlflüssigkeit vorgesehen, der über ein Einlaßventil 42 mit einem Wassertank verbunden ist.

Es sei nun angenommen, daß die Trommel 10 mit Behandlungsgut, d.h. mit Kunststoffscherben und mit Kunststoffgranulat, aufgefüllt ist. Die Kunststoffscherben seien Polypropylenteile einer Größe von 50 mm x 50 mm x 3 mm, die auf einer Seite mit einem Polyurethanlack beschichtet sind. Weiterhin seien in der Trommel 10 zylindrische Kunststoffgranulatkörner aus Polyamid PA 66 GF 30 enthalten, die eine Länge von ca. 3 mm und einen Durchmesser von ca. 3 mm haben. Das Gewichtsverhältnis der in der Trommel 10 vorhandenen Kunststoffteile zu dem Granulat sei 1:2, und die Trommel 10 sei zu 30 % ihres Volumens gefüllt. Der Schlagmühlenrotor wird mit einer Drehzahl von 600 Umdrehungen pro Minute in Drehung versetzt. Die Füllung der Trommel befindet sich bei Beginn der Rotation des Schlagmühlenrotors 14 auf einer Zimmertemperatur von ca. 20°C. Nach einigen Minuten ab Beginn der Rotation erreicht die Temperatur in der Trommel einen Wert von ca. 100°C, welche durch ein Temperaturanzeigegerät 44 gemessen wird. Zu diesem Zeitpunkt wird das Ventil 42 geöffnet, und es wird Wasser in die Trommel 10 eingelassen. Die Dosierung des Wassers erfolgt in Abhängigkeit von der an dem Temperatursensor 46 gemessenen Temperatur durch das Ventil 42 so, daß die Temperatur innerhalb der Trommel bei annähernd 100°C verharrt. Die Rotation des Schlagmühlenrotors 14 und die Kühlwasserzufuhr werden unter Aufrechterhaltung der Temperatur von 100°C solange fortgesetzt, bis die in der Trommel enthaltenen Kunststoffteile zu 99 % entlackt sind. Bei der Temperatur von 100°C läßt sich die Polyurethanlackschicht auf den Polypropylenteilen verhältnismäßig leicht ablösen. Dies konnte festgestellt werden, weil die Polyurethanhaut sich bei dieser Temperatur unter Faltenbildung mit dem Fingernagel über die sie tragende Fläche eines Polypropylenteils geschoben werden konnte.

Durch die Rotation des Schlagmühlenrotors wird eine Ablösung der erweichten und haftungsgelockerten Polyurethanlackschicht von den Kunststoffteilen bewirkt. Dabei sind für die Ablösung der Lackteilchen von den Polypropylenteilen insbesondere die Granulatkörner verantwortlich, welche durch die Hammerkörper 18 beschleunigt und gegen die Oberflächen der Polypropylenteile geschleudert werden. Daneben kommt ein gewisser Anteil der Ablösefunktion sicher auch den Hammerkörpern 18 unmittelbar zu, welche ebenfalls in Oberflächenkontakt mit den lackierten Oberflächen der Polypropylenteile treffen.

Kurz nach Beginn der Kühlflüssigkeitszugabe tritt bereits eine Verdampfung des Kühlwassers ein, was sich durch Beobachtung eines Dampfauslasses 48 feststellen läßt. Eine Überhitzung des Füllguts ist zuverlässig verhindert, wenn darauf geachtet wird, daß ständig Dampf durch die Dampfauslaßöffnung 48 entweicht, weil man dann weiß, daß noch flüssiges Kühlmittel in der Trommel 10 enthalten ist, dessen Verdampfung einen ausreichenden Kühleffekt bewirkt.

Nachdem durch Probenentnahme oder durch Einhaltung einer aufgrund von Vorversuchen ermittelten Behandlungszeit eine Entlackung bis zu ca. 99 % eingetreten ist, wird zunächst der Deckel 38 geöffnet. Infolge des Weiterlaufens des Schlagmühlenrotors 14 werden die Granulatteilchen, die Lackpartikel und etwa eingetretener Abrieb von den Kunststoffteilen und den Granulatpartikeln durch das Sieb 32 ausgeschleudert. Das Sieb ist so in seiner Siebweite eingestellt, daß es die Granulatteilchen eben noch durchläßt, die Kunststoffteile aber zuverlässig zurückhält. Die Mischfraktion bestehend aus Granulatteilchen, Lackpartikeln und etwaigem Abrieb wird in einem Sammelgefäß 50 gesammelt. Nach Entfernung des Sammelgefäßes 50 kann der Deckel 36 geöffnet werden, so daß bei langsamem Weiterlaufen des Schlagmühlenrotors 14 die entlackten Kunststoffteile in einem weiteren Sammelgefäß 52 gesammelt werden können. Diese Kunststoffteile sind dann brauchbar zur weiteren Verwendung als Kunststoffrohmaterial.

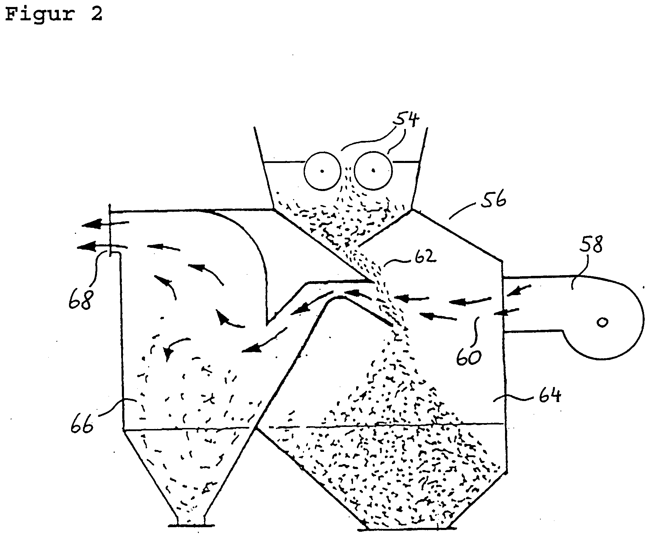

Die in dem Sammelgefäß 50 aufgefangene Mischfraktion bestehend aus dem Granulat, Lackpartikeln und etwaigem Abrieb wird durch ein Speisewalzenpaar 54 einem Windsichter 56 gemäß Fig. 2 zugeführt. Der Windsichter 56 umfaßt ein Gebläse 58, durch welches ein Luftstrom 60 erzeugt wird. Der Luftstrom 60 kreuzt einen durch das Speisewalzenpaar 54 angelieferten Strom der Mischfraktion, welcher mit 62 bezeichnet ist. Die schwereren Granulatkörner gelangen in einen Sammelraum 64, während die leichteren Lackpartikel und etwaige Abriebpartikel durch den Luftstrom 60 in einen Sammelraum 66 transportiert werden. Der Luftstrom kann bei einem Luftauslaß 68 austreten, wobei dort nötigenfalls nochmals Abscheidungsmaßnahmen getroffen sein können.

Mit einer Granulatfüllung können im Schnitt 200 Entlackungsvorgänge durchgeführt werden. Man wird aber laufend eine Zufuhr neuen Granulats jeweils nach einem oder einigen Entlackungsvorgängen durchführen, so daß ständig eine ausreichende Menge an scharfkantigem Granulat vorhanden ist. Die Neuzufuhr von Granulat wird entsprechend den Abriebverlusten eingestellt.

Während in der Trommel 10 eine Charge behandelt wird, wird in dem Dosierungsraum 30 die für den nächsten Behandlungsvorgang vorgesehene Menge an Kunststoffteilen dosiert, während in dem Dosierraum des Zuführschachts 24 die entsprechende Granulatmenge vordosiert wird. Die Vordosierung erfolgt bei geschlossenem Schieber 28 und geöffnetem Schieber 26. Wenn der Dosierraum aufgefüllt ist, wird der Schieber 26 in die Verschlußstellung gemäß Fig. 1 gebracht. Nach vollständiger Entleerung der Trommel 10 werden die Deckel 36 und 38 wieder in Verschlußstellung gebracht. Nunmehr kann das in dem Dosierraum 30 vordosierte Kunststoffteilegut durch Öffnen des Schiebers in die Trommel 10 eingelassen werden, und analog kann das in dem Zuführschacht 24 vordosierte Granulat in die Trommel 10 eingelassen werden. Damit kann der nächste Entlackungsvorgang beginnen.

Durch den Schlagmühlenrotor 14 wird eine heftige Bewegung auch der Kunststoffteile herbeigeführt, so daß diese ständig wechselnde Orientierungen im Raum einnehmen und damit allseitig von den Granulatkörnern beaufschlagt werden.

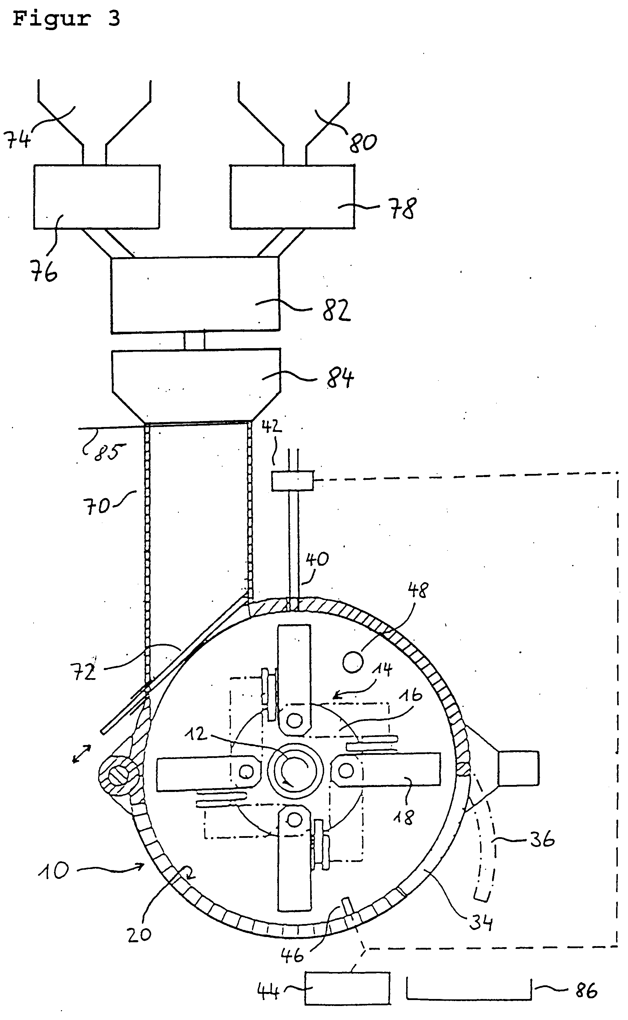

In Fig. 3 sind die mit Fig. 1 übereinstimmenden Teile mit den gleichen Bezugsziffern bezeichnet. Im oberen Bereich der Trommel ist hier an den Trommelinnenraum ein Zufuhrschacht 70 angeschlossen, welcher als Durchgangskanal bei der Beschickkung des Trommelinnenraums mit Substratteilen und Granulatteilchen dient. In dem Zufuhrschacht 70 ist ein Schleusenschieber 72 vorgesehen, welcher den Trommelinnenraum begrenzt.

Zur Beschickung des Trommelinnenraums werden zunächst Substratteile aus einem Silo 74 für Substratteile in ein Dosiergerät 76, beispielsweise eine Zellenradschleuse, eingebracht. Analog werden Granulatteilchen in einem Dosiergerät 78 vorgelegt, welches an einen Silo 80 für Granulatteilchen angeschlossen ist. Die Granulatteilchen und die Substratteile werden über eine Vormischeinrichtung 82 dosiert in einen Chargenvorlagebehälter 84 eingegeben, der durch einen Bodenschieber 85 abgeschlossen ist. Wenn nun die vorherige Charge aus dem Trommelinnenraum vollständig über die Öffnung 34 ausgebracht worden ist, kann die in dem Chargenvorlagebehälter 84 vorliegende weitere Gemischcharge durch Öffnen der Schieber 85 und 72 in kürzester Zeit in den Trommelinnenraum eingebracht werden. Hierzu ist es nicht einmal erforderlich, die Schlagmühle zum Stillstand zu bringen, da jedenfalls bei Umlauf in Pfeilrichtung 12 keine wesentliche Gefahr des Rückschleuderns besteht. Auf diese Weise kann die zur Behandlung einer Charge insgesamt notwendige Zeit erheblich verkürzt werden.

Die in dem Sammelgefäß 86 aufgefangene Mischfraktion bestehend aus entlackten Substratteilen, Granulatteilchen, Lackpartikeln und etwaigem Abrieb kann durch eine Siebmaschine in die einzelnen Fraktionen getrennt werden. Hierzu wird die Mischfraktion zunächst mit einem Sieb mit kleiner Maschenweite gesiebt, wobei Granulatteilchen und Substratteile zurückgehalten werden, während Lackpartikel und etwaiger Abrieb abgetrennt werden. Anschließend wird das nun noch aus Granulatteilchen und Substratteilen bestehende Gemisch einem Siebvorgang unterzogen, bei dem eine Siebweite eingesetzt wird, bei der die Substratteile zurückgehalten werden, während die Granulatteilchen durchtreten können. Auf diese Weise werden drei separate Fraktionen erhalten, die entsprechend weiterverwendet werden können. Anstelle des Siebens kann auch hier ein Windsichten oder ein anderes herkömmliches Trennverfahren angewandt werden. Das Sieb 32 von Fig. 1 kann hier vollständig entfallen.

Die vorstehend beschriebenen Betriebsweisen wurden angewandt für die Entlackung von Polypropylenteilen der oben angegebenen ungefähren Größe, die mit Polyurethanlack beschichtet waren. Die Lackierung war dabei in der Weise vorgenommen worden, daß auf die eine Seite der Polypropylenteile ein Primer auf Polyurethanbasis aufgetragen wurde und auf diesen Primer ein Decklack ebenfalls auf Polyurethanbasis. Die Lackierungsbedingungen wurden dabei so gewählt, daß die üblichen Anforderungen der Automobilindustrie an Stoßfängeroberflächenverhalten erfüllt wurden. Diese Forderungen gehen insbesondere dahin, daß die lackierten Oberflächen durch Steinschlag nicht beschädigt werden. Es zeigte sich, daß der Lack durch das erfindungsgemäße Verfahren zu mehr als 99 % abgetragen werden konnte.

Auch die üblichen metallic-beschichteten Kunststoffteile, die bei metallic-lackierten Karosserien zum Einsatz kommen, konnten nach dem erfindungsgemäßen Verfahren behandelt werden.

## Patentansprüche

1. Verfahren zur Entlackung von lackierten Substratteilen auf Kunststoffbasis, gekennzeichnet durch die folgenden Schritte:
a) Die Substratteile werden zumindest im Lackbeschichtungsbereich auf eine Temperatur innerhalb eines vorbestimmten Temperaturbereichs erwärmt, bei der die Struktur der Substratteile im wesentlichen unverändert erhalten bleibt, die Haftung der Lackschicht auf den Substratteilen jedoch reduziert wird;
b) die Substratteile werden einer Lackablösebehandlung durch bewegte Granulatteilchen ausgesetzt, während die Temperatur in dem vorbestimmten Temperaturbereich gehalten wird;
c) die zur Temperatureinstellung auf den vorbestimmten Temperaturbereich benötigte Wärme wird wenigstens zum Teil durch die zur Behandlung mit den Granulatteilchen aufgewendete kinetische Energie zugeführt;
d) der Anstieg der Temperatur über den vorbestimmten Temperaturbereich hinaus wird durch Zufuhr einer Kühlflüssigkeit begrenzt, deren Flüssigkeits-Dampfphasen-Umwandlungstemperatur unter den gegebenen Systemdruckverhältnissen annähernd in dem vorbestimmten Temperaturbereich liegt, wobei mindestens ein Teil der zugeführten Flüssigkeit verdampft wird;
e) das Granulat und die abgelösten Lackpartikel werden von den Substratteilen abgetrennt.

2. Verfahren nach Anspruch 1,
dadurch gekennzeichnet,
daß die zur Temperatureinstellung in den vorbestimmten Temperaturbereich benötigte Wärme im wesentlichen vollständig durch die zur Behandlung mit bewegten Granulatteilchen aufgewandte kinetische Energie zugeführt wird.

3. Verfahren nach Anspruch 1 oder 2,
dadurch gekennzeichnet,
daß die Flüssigkeitszufuhr erst dann eingeleitet wird, wenn eine haftungsvermindernde Temperatur innerhalb des vorbestimmten Temperaturbereichs erreicht ist.

4. Verfahren nach Anspruch 1 - 3,
dadurch gekennzeichnet,
daß die Behandlung mit bewegten Granulatteilchen und die Flüssigkeitszufuhr zur Temperatureinstellung fortgesetzt werden, bis ein gewünschter Grad der Entlackung der Substratteile eingetreten ist.

5. Verfahren nach einem der Ansprüche 1 - 4,
dadurch gekennzeichnet,
daß die Substratteile, die Granulatteilchen und die Lackpartikel, gegebenenfalls zusammen mit etwaigen Flüssigkeitsresten und/oder Abrieb von Substratteilen und/oder Granulatteilchen, gemeinsam aus einer Behandlungszone entfernt werden und anschließend durch Siebungs- und/oder Windsichtungs- und/oder Waschmaßnahmen voneinander getrennt werden.

6. Verfahren nach einem der Ansprüche 1 - 5,
dadurch gekennzeichnet,
daß die Granulatteilchen und die Lackpartikel gemeinsam, gegebenenfalls zusammen mit etwaigen Flüssigkeitsresten und/oder Abrieb von Substratteilen und/oder Granulatteilchen, von den Substratteilen abgetrennt werden.

7. Verfahren nach Anspruch 6,
dadurch gekennzeichnet,
daß das Gemisch aus Substratteilen, Granulatteilchen und Lackpartikeln getrocknet wird, bevor die Granulatteilchen und die Lackpartikel gemeinsam von den Substratteilen abgetrennt werden.

8. Verfahren nach einem der Ansprüche 1 - 7,
dadurch gekennzeichnet,
daß die Granulatteilchen und die Substratteile während der Lackablösebehandlung der Substratteile mit den Granulatteilchen einer relativen Wirbelbewegung unterworfen werden, welche die Behandlung aller lackierten Flächen der Substratteile gewährleistet.

9. Verfahren nach einem der Ansprüche 1 - 8,
dadurch gekennzeichnet,
daß die Lackablösebehandlung der Substratteile durch Beschuß der Substratteile mit Granulatteilchen erfolgt.

10. Verfahren nach einem der Ansprüche 1 - 8,
dadurch gekennzeichnet,
daß die Lackablösebehandlung der Substratteile durch Schlagbehandlung eines aus Substratteilen und Granulatteilchen bestehenden Mischguts erfolgt.

11. Verfahren nach einem der Ansprüche 1 - 10,
dadurch gekennzeichnet,
daß die Lackpartikel nach der Abtrennung einer Granulatteilchen-Lackpartikel-Mischfraktion von den Substratteilen von dieser Mischfraktion abgetrennt werden.

12. Verfahren nach Anspruch 11,
dadurch gekennzeichnet,
daß die Abtrennung der Lackpartikel von der Mischfraktion durch Auswaschen erfolgt.

13. Verfahren nach Anspruch 12,
dadurch gekennzeichnet,
daß die Lackpartikel aus der Auswaschflüssigkeit abgetrennt werden.

14. Verfahren nach Anspruch 11,
dadurch gekennzeichnet,
daß die Lackpartikel aus der Mischfraktion pneumatisch abgetrennt werden.

15. Verfahren nach einem der Ansprüche 1 - 14,
dadurch gekennzeichnet,
daß das Verfahren chargenweise durchgeführt wird.

16. Verfahren nach einem der Ansprüche 1 - 14,
dadurch gekennzeichnet,
daß das Verfahren wenigstens teilweise kontinuierlich durchgeführt wird.

17. Verfahren nach einem der Ansprüche 1 - 16,
dadurch gekennzeichnet,
daß im Falle der Behandlung von Substrat-Lack-Kombinationen, bei denen einerseits die Struktur der Substratteile in der Gegend von 100°C im wesentlichen erhalten bleibt und andererseits die Lackschichten in der Gegend von 100°C eine für die mechanische Ablösung ausreichende Haftungsreduzierung erleiden, unter Atmosphärendruck Wasser zugeführt wird.

18. Verfahren nach einem der Ansprüche 1 - 17,
dadurch gekennzeichnet,
daß es zur Entlackung von lackierten Kunststoffteilen mit einem Gehalt an Polypropylen, Polybutylenterephthalat oder einem Polybutylenterephthalat/Polycarbonat-Blend angewandt wird.

19. Verfahren nach einem der Ansprüche 1 - 18,
dadurch gekennzeichnet,
daß es zur Behandlung von Substratteilen verwendet wird, welche mit Kunstharzlacken, insbesondere Kunstharzlacken auf Polyurethanbasis, beschichtet sind.

20. Verfahren nach einem der Ansprüche 1 - 19,
dadurch gekennzeichnet,
daß es zur Behandlung von Substratteilen verwendet wird, welche aus der Aufarbeitung von Kraftfahrzeugen und Kraftfahrzeugteilen entstehen.

21. Verfahren nach einem der Ansprüche 1 - 20,
dadurch gekennzeichnet,
daß es zur Behandlung von flächigen Substratteilen verwendet wird, welche Abmessungen in der Größenordnung von 30 - 60 x 30 - 60 x 2 - 5 mm besitzen.

22. Verfahren nach einem der Ansprüche 1 - 21,
dadurch gekennzeichnet,
daß es zur Behandlung von Substratteilen verwendet wird, die durch eine vorangehende Schredderbehandlung gewonnen wurden.

23. Verfahren nach einem der Ansprüche 1 - 22,
dadurch gekennzeichnet,
daß als Granulatteilchen Kunststoffteilchen, insbesondere Polyamidteilchen, Nußschalenkörner oder Sandkörner verwendet werden.

24. Verfahren nach einem der Ansprüche 1 - 23,
dadurch gekennzeichnet,
daß ein Granulat mit einer Korngröße von 0,5 bis 3 mm verwendet wird.

25. Verfahren nach einem der Ansprüche 1 - 24,
dadurch gekennzeichnet,
daß Granulatkörner mit eck- oder/und kantenreicher Oberfläche, insbesondere zylindrische Körner, verwendet werden.

26. Verfahren nach einem der Ansprüche 1 - 25,
dadurch gekennzeichnet,
daß das Granulat mehrfach verwendet wird, wobei Abriebverluste jeweils durch Neugranulat ersetzt werden.

27. Verfahren zur Entlackung von lackierten Substratteilen, gekennzeichnet durch die folgenden Schritte:
a) Die Substratteile werden zumindest im Lackbeschichtungsbereich auf eine Temperatur innerhalb eines vorbestimmten Temperaturbereichs erwärmt, bei der die Struktur der Substratteile im wesentlichen unverändert erhalten bleibt, die Haftung der Lackschicht auf den Substratteilen jedoch reduziert wird;
b) die Substratteile werden einer mechanischen Lackablösebehandlung z.B. durch Granulatbeschuß oder/und Reibkontakt mit Reibkörpern oder/und Schlagkontakt mit Schlagkörpern ausgesetzt, während die Temperatur in dem vorbestimmten Temperaturbereich gehalten wird;
c) die zur Temperatureinstellung auf den vorbestimmten Temperaturbereich benötigte Wärme wird wenigstens zum Teil durch die zur mechanischen Lackablösebehandlung aufgewendete kinetische Energie zugeführt;
d) der Anstieg der Temperatur über den vorbestimmten Temperaturbereich hinaus wird durch Zufuhr eines Kühlmittels begrenzt;
e) die Substratteile werden von dem Granulat, den Reibkörpern bzw. Schlagkörpern, etwaigem Abrieb und etwaigen Kühlmittelrückständen abgetrennt, gewünschtenfalls in Verbindung mit weiteren Schritten nach einem der Ansprüche 1 - 26.

28. Einrichtung zum Entlacken von lackierten Substratteilen auf Kunststoffbasis, insbesondere zur Durchführung des Verfahrens nach einem der Ansprüche 1 - 27, gekennzeichnet durch eine Schlagmühle (10) mit einem Schlagraum, einen in diesem Schlagraum umlaufenden Schlagmühlenrotor (14), Beschickungsmittel (22) zur Beschickung des Schlagraums mit den Substratteilen, Beschickungsmittel (24) zur Beschickung des Schlagraums mit dem Granulat, Antriebsmittel zum Antrieb des Schlagmühlenrotors, Erwärmungsmittel zum Erwärmen der Substratteile zumindest in ihren lackierten Oberflächenbereichen auf eine Temperatur innerhalb eines vorbestimmten Temperaturbereichs, in dem die Substratteile ihre Struktur im wesentlichen beibehalten, die Haftung der Lackbeschichtung an den Substratteilen jedoch reduziert wird, Beschickungsmittel (40) zur Einführung von Kühlflüssigkeit in den Schlagraum und Mittel (34,32) zum Abzug und zur wenigstens teilweisen Fraktionierung der Substratteile, des Granulats, abgelöster Lackpartikel etwaiger Rückstände der Kühlflüssigkeit und etwaigen Abriebs der Substratteile und/oder des Granulats.

29. Einrichtung nach Anspruch 28,
dadurch gekennzeichnet,
daß der Schlagmühlenrotor (14) als Hammermühlenrotor ausgebildet ist.

30. Einrichtung nach Anspruch 28 oder 29,
dadurch gekennzeichnet,
daß die Antriebsmittel des Schlagmühlenrotors auf eine Leistungsaufnahme einstellbar sind, bei welcher sie die Funktion der Wärmezufuhr wenigstens teilweise erfüllen.

31. Einrichtung nach Anspruch 30,
dadurch gekennzeichnet,
daß die Zuführmittel (40) der Kühlflüssigkeit an eine Kühlmittelversorgung angeschlossen sind, welche ein in dem vorbestimmten Temperaturbereich verdampfendes Kühlmittel liefert und daß der Schlagraum mit einem Dampfabzug (48) versehen ist.

32. Einrichtung nach einem der Ansprüche 28 - 31,
gekennzeichnet durch Regelungsmittel zur Aufrechterhaltung des vorbestimmten Temperaturbereichs.

33. Einrichtung nach einem der Ansprüche 28 - 32,
dadurch gekennzeichnet,
daß die Schlagmühle für Chargenbetrieb ausgebildet ist.

34. Einrichtung nach Anspruch 33,
dadurch gekennzeichnet,
daß die Schlagmühle eine verschließbare Entnahmeöffnung (34) in solcher Lage aufweist, daß der Inhalt des Schlagraums bei Stillstand oder bei Austragsbetrieb des Schlagmühlenrotors austritt.

35. Einrichtung nach einem der Ansprüche 28 - 34,
dadurch gekennzeichnet,
daß der Schlagraum wenigstens teilweise durch ein Sieb (32) begrenzt ist, welches zwischen einem Durchlaßzustand und einem Abschlußzustand umstellbar ist, wobei dieses Sieb in seiner Maschenweite so bemessen ist, daß es im Durchlaßzustand Lackpartikeln, gewünschtenfalls auch den Granulatkörnern und etwaigem Abrieb der Substratteile oder/und der Granulatkörner Durchlaß gewährt.

36. Einrichtung nach einem der Ansprüche 28 - 35,
dadurch gekennzeichnet,
daß die Beschickungsmittel (22) für die Substratteile oder/und die Beschickungsmittel (24) für das Granulat mit Chargenbildungsmitteln ausgeführt sind, welche während des Entlackungsbetriebs einer Charge die Bildung einer nächstfolgend zu behandelnden Charge oder der Komponenten für die nächstfolgend zu behandelnde Charge gestatten.

37. Einrichtung nach einem der Ansprüche 28 - 36,
dadurch gekennzeichnet,
daß der Schlagraum gegen Flüssigkeitsablauf im wesentlichen abgedichtet oder abdichtbar ist.

38. Einrichtung zum Entlacken von lackierten Substratteilen auf Kunststoffbasis, insbesondere zur Durchführung des Verfahrens nach einem der Ansprüche 1 - 27, gekennzeichnet durch einen Behandlungsraum, Behandlungsmittel in diesem Behandlungsraum zur mechanischen Lackablösebehandlung, Beschickungsmittel zur Beschickung des Behandlungsraums mit den Substratteilen, Antriebsmittel zum Antrieb der Behandlungsmittel, Beschickungsmittel zur Einführung von Kühlflüssigkeit in den Behandlungsraum und Mittel zum Abzug und zur wenigstens teilweisen Fraktionierung der Substratteile, abgelöster Lackpartikel, etwaiger Rückstände der Kühlflüssigkeit und etwaigen Abriebs der Substratteile, wobei die Kühlflüssigkeit zur Begrenzung des durch die Zuführung mechanischer Behandlungsenergie bewirkten Temperaturanstiegs der Substratteile auf einen Temperaturbereich dient, in dem die Struktur der Substratteile im wesentlichen unverändert erhalten bleibt, die Haftung der Lackschicht auf den Substratteilen jedoch reduziert wird, gewünschtenfalls in Verbindung mit weiteren Merkmalen nach einem der Ansprüche 28 - 37.
